(19) Europäisches Patentamt
European Patent Office
Office européen des brevets

(11) **EP 2 696 605 A1**

(12) **EUROPEAN PATENT APPLICATION**

(43) Date of publication:
**12.02.2014 Bulletin 2014/07**

(51) Int Cl.:
***H04W 4/02*** *(2009.01)*

(21) Application number: **12179920.9**

(22) Date of filing: **09.08.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **NTT DOCOMO, INC.**
**Chiyoda-ku**
**Tokyo (JP)**

(72) Inventors:
• **Luther, Marko**
**80687 Munich (DE)**

• **Cao, Hu**
**80687 Munich (DE)**
• **Souville, Bertrand**
**80687 Munich (DE)**
• **Marth, Michael**
**80687 Munich (DE)**

(74) Representative: **Betten & Resch**
**Theatinerstrasse 8**
**80333 München (DE)**

(54) **APPARATUS AND METHOD FOR ENERGY EFFICIENT LOCATION SENSING**

(57)      An apparatus for energy efficient location sensing of a mobile device, said apparatus comprising:
An orientation sensing module for sensing the orientation of said mobile device;
one or more location sensing modules for sensing the location of said mobile device,
a control module for controlling said orientation sensing module such that it repeatedly senses the orientation of said mobile device, wherein said control module controls said one or more location sensing modules such that at least one of said one or more location sensing modules is switched on if said sensed orientation indicates an orientation change of said mobile device.

(a) activity states

(b) Power states

**Fig. 1**

**Description**

**FIELD OF INVENTION**

The present invention relates to an apparatus and a method for energy efficient location sensing.

**BACKGROUND OF THE INVENTION**

Surveys on human activity patterns in the United States have revealed that people spend approximately 87% of their time in enclosed buildings. Since the residents in Europe and Asia have the similar living patterns of the US people, this should also be applicable for the mobile phone users worldwide. Location sensing is only needed during the times when the user is moving from a location to another location.

Several solutions exist in the detection of the start and the end of a trip. The straightforward method compares the current location with the previous location. The application must periodically acquire the locations from GPS or a central location service provider such as Google with WIFI scanning result. If the distance between two locations is smaller than a given threshold, then the moving object is considered static. If a moving object was static for a while but suddenly the distance is larger than the threshold, then we know that the user has left the previous location. Either GPS or wireless communication is very energy intensive. This method will consume considerable battery to detect the location changes. Compared with all the time continuous location sensing, the battery life saving of this method is not significant. Other drawbacks of this method are the indoor availability problem of the GPS signal and the bill caused by 3G/LTE wireless network usage.

An improvement of the above method uses 802.11 WIFI hotspot SSIDs and their signal strengths as the environmental footprint of a place. According to this approach the phone periodically scans for surrounding WIFI hotspots and compares the scanning result with the previous one. If the difference is big enough, then it is concluded that the moving object has left the previous place. Again, WIFI scanning is energy intensive.

Another approach uses GSM cell IDs as the metric of location changing. This method is very energy efficient but has several severe drawbacks: Firstly the size of GSM cell varies in different geographical locations. In countryside areas, there is only on cell or there is no cell at all. In those areas, the latency of movement detection therefore can be very high, and the method is not applicable in those regions in practice. But even for areas with high-density coverage of (small) cells, the latency of this approach of movement detection can still be high.

Another instrumentation commonly used in the detection of user's movement is the accelerometer. When a phone is inactive, the magnitude of accelerometer oscillation is small, compared with that when the object is moving. According to the accelerometer oscillation magnitude, the mobile phone turns on or off the location sensors. Continuous sensing with accelerometer is still a heavy burden on battery. Duty cycling technology (i.e., sensing with the half frequency in the normal case) is usually employed. However, if the sampling frequency is too low, the accelerometer may not able to capture the user's movement (The oscillation magnitude of accelerometer will shrink to normal range if the user is accidentally static at the moment of sampling). Given this constraint, the energy saving of the accelerometer approach is still not satisfactory for the task of movement detection in the long indoor hours.

It is therefore desirable to provide a more energy efficient approach for detecting and/or tracking the movement of a mobile device.

**SUMMARY OF THE INVENTION**

According to one embodiment there is provided an apparatus for energy efficient location sensing of a mobile device, said apparatus comprising:
An orientation sensing module for sensing the orientation of said mobile device; one or more location sensing modules for sensing the location of said mobile device, a control module for controlling said orientation sensing module such that it repeatedly senses the orientation of said mobile device, wherein said control module controls said one or more location sensing modules such that at least one of said one or more location sensing modules is switched on if said sensed orientation indicates an orientation change of said mobile device.

The usage of the orientation sensing module as a trigger to switch on the location sensing module enables an energy efficient usage of the location sensing module based on an activity detection. Thereby the energy consumption of location tracking can be reduced by limiting it to those time periods where an activity of the phone has been detected.

According to one embodiment if based on the location sensed by said one or more location sensing modules or said orientation sensed by said orientation sensing module it is determined that said mobile device does not move, said control module switches off at least one of said one or more location sensing modules.

The switching of in case of inactivity reduces the energy consumption of the location sensing module.

According to one embodiment an orientation change is detected based on the angle difference of two magnetic field vector measurements. This is an energy efficient activity detection, because it is based on comparing solely two measurements.

According to one embodiment the frequency with which said orientation sensing module senses the orientation of said mobile device is changed depending on the time in accordance with the behaviour pattern of the user of said mobile device such that at a time where the behaviour pattern corresponds to a lower activity the sampling frequency is lower and at a time where the behaviour pattern corresponds to a higher activity the sampling frequency is higher.

The adaptation of the orientation change detection based on a measured user behaviour further enables the reduction of power consumption.

According to one embodiment said behaviour pattern is measured for user of said mobile device by recording over time the frequency with which a sensed orientation is indicative of a change from an inactive state to an active state.

This is an implementation of a possible activity detection over time.

According to one embodiment said apparatus comprises a first location sensing module having a lower energy consumption and a second location sensing module having a higher energy consumption, and wherein if said orientation sensing module indicates an orientation change said first location sensing module is switched on, and wherein if said first location sensing module indicates that said mobile device leaves a certain location or area, said second location sensing module is switched on.

This enables a two-staged location sensing, one triggered or switched on by activity detection based on an orientation change and a second stage triggered or switched on by a movement detection. This enables a further reduction of energy consumption.

According to one embodiment said first location sensing module has a lower energy consumption than said second location sensing module, and/or wherein said first location sensing module has a lower accuracy than said second location sensing module.

In this manner the two-stage approach can be implemented in a preferable way.

According to one embodiment there is provided a method for energy efficient location sensing of a mobile device, said method comprising:

repeatedly sensing the orientation of said mobile device by orientation sensing module,
if said sensed orientation indicates an orientation change of said mobile device, switching on one or more location sensing modules.

This is a suitable implementation of a method according to an embodiment of the invention.

According to one embodiment there is provided a computer program which when being executed on a computer enables said computer to carry our a method according to one of the embodiments of the invention.

## DESCRIPTION OF THE DRAWINGS

Fig. 1 schematically illustrates the states according to an embodiment of the invention.
Fig. 2 schematically illustrates an activity detection according to an embodiment of the invention.

## DETAILED DESCRIPTION

Observations of the user behavior show that most of time either the phone is absolutely static or the physical state change of the phone is low. The phone may stay on a table, in  bag, or in a packet, when the user is sleeping, working, dinning, or resting. In those circumstances it is not necessary to update locations. According to one embodiment this user behaviour can be utilized by a mobile phone or a mobile device which comprises an orientation sensing module for sensing the orientation of said mobile device (such as e.g. a magnetometer), one or more location sensing modules for sensing the location of said mobile device (such as e.g. a GPS sensor and/or a WiFi cell detection mechanism and/or a cell phone cell detection mechanism). It further comprises a control module for controlling said orientation sensing module such that it repeatedly senses the orientation of said mobile device, wherein the control module controls said one or more location sensing modules such that at least one of said one or more location sensing modules is switched on if said sensed orientation indicates an orientation change of said mobile device.

By this mechanism the mobile phone can be "woken up" from a sleep mode triggered by the orientation sensor.

On the other hand, if based on the location sensed by said one or more location sensing modules or said orientation sensed by said orientation sensing module it is determined (by said control module) that the mobile device does not move, then the control module switches off at least one of said one or more location sensing modules.

A device or module implementing this method can be used as an advantageous component of a location sensing machine design. The huge battery consumption of continuous location sensing by a location sensing module is a key factor that hinders the acceptance of location based mobile application. Frequent sampling of a phone's location with the energy hungry location sensors when the phone owner is static is a huge waste of battery. The method can improve the energy efficiency of location sensing when the user is in low activity mode by suspending unnecessary location updates.

With such an approach there is an opportunity for the phone to enter the full *sleep* mode. According to one embodiment there is provided a phone having a location sensing module as well as the orientation sensing module. The phone according to one embodiment can be put in an energy saving or *"sleep"* mode where all sensors (including the location sensing module, according to one embodiment even also the orientation sensing module) and CPU are turned off and all resources have been released. In the sleep mode, the orientation sensing module only periodically "wakes up" to check whether the phone's orientation has changed, which is an indication that the phone user has left the low activity state and ready to move out the place. The energy consumption in sleep mode thereby is minimized. According to a further embodiment only the location sensing module is put into sleep mode and the orientation sensing module is kept alive and not repeatedly "woken up" but just repeatedly "measures" the orientation.

The orientation change can be measured by an orientation sensing module such as an orientation sensor. Such an orientation sensor may be implemented by a magnetometer which nowadays is a standard component of almost all smartphones. In the sleep mode the frequency with which the magnetometer checks the orientation is "low" compared to the frequency being "high" or "higher" if the mobile phone is not in the sleep mode. The term "low" means that the frequency can be decreased to such an extent that the latency of the orientation change detection (and thereby also the location change detection, because an orientation change triggers the switching on of the location sensing module) is still acceptable. An implementation of a "low frequency" may sample e.g. once per minute, once per one to 10 minutes, once per ten to thirty minutes, or once per hour. An implementation of the frequency being "high" or "higher" is just a frequency being set higher than in case of the implementation where the frequency is set to "low". The concrete values of the frequency for "high" or "low" may be chosen by the skilled person according to the circumstances while considering that as the frequency decreases the energy saving also increases as well as the corresponding latency.

Based on the above approach, according to one embodiment there is provided a power saving technique for location sensing that opportunistically suspends the location sensing module (or modules) of the phone whenever the phone is in Inactive state (as detected by no change occurring in terms of orientation change, according to one embodiment also location change). The magnetometer is used to detect the orientation changes of a phone, and it is running periodically in background.

According to one embodiment, by comparing the angle change of two 3D magnetic field vectors sampled at different time, it can be detected whether the phone has been moved or not.

In other words, an orientation change is detected based on the angle difference of two magnetic field vector measurements. If the phone's orientation has not changed for a while, according to one embodiment movement detection is suspended and the phone is let going into sleep mode. If the phone was in sleep mode and an orientation change is detected, the phone is "woken up" will and resume movement detection.

The check of a phone's orientation change is an energy efficient detection of movement or an "indication of movement". While the magnetometer consumes few energy compared to other movement sensors like GPS, it is still an energy overhead that preferably can further be reduced.

According to one embodiment the energy consumption on performing orientation change detection is further reduced by using an adaptive sampling frequency method for the magnetometer. According to one embodiment, when a phone is unlikely to move in a short time (e.g. during night hours), the detection frequency (of the orientation sensor) is reduced by setting it to "extremely low" (compared to only "low"). On the other hand, during the time when according to the phone owner's historical movement pattern the owner usually leaves a place (e.g. in morning hours), the detection frequency (for the orientation sensor) is set higher, e.g. to "high" instead of "low" or "extremely low". The concrete values of the detection frequencies for "high", "low" and "extremely low" may be chosen by the skilled person according to the circumstances.

According to one embodiment the frequency with which the orientation sensing module senses the orientation of said mobile device is changed depending on the time in accordance with the behaviour pattern of the user of said mobile device such that at a time where the behaviour pattern corresponds to a lower activity the sampling frequency is lower and at a time where the behaviour pattern corresponds to a higher activity the sampling frequency is higher.

For identifying the behaviour pattern of the user, according to one embodiment the movement pattern of the user is measured over time to identify a likelihood of movement over time. The detection frequency of the orientation sensor according to one embodiment is then adapted based on the measured movement pattern and its corresponding likelihood of movement such that at a time where the likelihood of movement is higher the detection frequency is set to a higher value and at a time where the likelihood of movement is lower the detection frequency or the orientation sensor is set to a lower value. In other words, according to one embodiment the detection frequency of the orientation sensor is controlled such that it correlates with a measured activity pattern of a user.

The embodiments described so far provide several advantages compared with the prior art.

Compared with the known solutions, the described approach's energy consumption is extremely low for the following reasons:

(1) The magnetometer is a low power sensor.

(2) The magnetometer can "remember" the orientation. When the orientation of a phone changes, it will be reflected on the change of the angle between the current 3D-vector and the previous measured one. Then it stays in that direction until the phone's orientation changes again. In contrast, the accelerometer activity level must be polled constantly to detect a change. Therefore the proposed approach using an orientation change measurement by the magnetometer to trigger the switching on or off of another location sensor enables the phone to change into sleep mode completely (including switching off the magnetometer) while the methods based on accelerometer cannot do so.

According to one embodiment there are provided a first location sensing module having a lower energy consumption and a second location sensing module having a higher energy consumption, and wherein if said orientation sensing module indicates an orientation change said first location sensing module is switched on, and wherein if the first location sensing module indicates that said mobile device leaves a certain location or area, said second location sensing module is switched on.

The first location sensing module may be regarded as a "movement detection module" which has less accuracy than e.g. an exact location sensor such as GPS but which on the other hand has a lower power consumption than a GPS sensor and is still suitable to detect whether a mobile device has "left a certain place" like a building. The "first location sensing module" may therefore be regarded as a "movement detection module" which detects a "start of a trip" in the sense that the mobile device is moving away from a relatively confined place like a building. An implementation of a "movement detection module" according to one embodiment compares the "environmental footprints" to verify if the object is staying in a certain location. Examples of such environmental footprints which can be used are locations, noise level, and features, like WIFI hotspots and signal strength, GSM cell IDs, etc. A "first location sensing module" which acts as a movement detection module may therefore be implemented by any module which is capable of sensing one or more of locations, noise level, and features, like WIFI hotspots and signal strength, GSM cell IDs, etc.

The first location detection module then is switched on based on an activity detection by the orientation sensing module. In this way the "movement detection" is enabled which is capable to detect whether the mobile device "moves away" from a certain place (like a building). For that purpose the "movement detection module" (the first location sensing module) repeatedly performs a detection and judges whether there is a "movement" in the sense that the mobile device leaves a location.

If such a "movement" is detected, then according to one embodiment a second location sensing module is switched on which according to one embodiment has a higher accuracy and/or a higher power consumption. Using this second location sensing module then the "trip" of the mobile device can be tracked.

Therefore according to one embodiment there is performed a location sensing in two stages, a "first location sensing" by a first location sensing module which is suitable to detect a "start of a movement" (a "movement detection") and which is switched on by detection an orientation change, and a second stage location sensing which is performed by a second location sensing module which is switched on once such a movement has been detected by the first location sensing module. The second location sensing module may according to one embodiment be a GPS sensor.

Also with such a two-staged approach the latency of movement detection is also low since the movement detector (the first location sensing module) which detects movement of the device from one location to another has been started before the moving object has left the place in most of cases. In this scenario, the latency of movement detection is in par with the movement detecting method used. Even in the rare cases that a user grasps his phone and leaves immediately (i.e. "before" the next "movement measurement" by the first location sensing module takes place), the latency can be reduced statistically by intelligently adapting the sensing frequency of the orientation sensing module based on the observations on the user's historical daily life pattern (the user behaviour). With this approach, in the big trunk of time when the user is indoor, according to one embodiment a sensor which senses the movement can be turned off and let the phone sleep to conserve energy. The chance that the starting segment of a trip is missed in this general location sensing approach is therefore low.

As described before, according to one embodiment there is provided a two-stage location sensing, with the first location sensing module being a "movement detector". The sampling frequency of the movement detection sensor can be low to avoid the energy consumption of the sensor and the associated CPU computation cost by switching it on only when an activity is detected by the orientation sensor.

Now some further embodiments will be described which proved a power management technique to reduce the energy waste in sensing and processing location data, in particular when the phone is static in a geographical location. The proposed approach uses *activity states* to describe the movement behaviour of a phone, and uses *power states* to describe the power management strategies in different activity states. A power state corresponds to an *activity* state.

A moving object has the following three activity states:

- **Enroute:** The moving object is moving from a geographical location to another geographical location. The distance between two locations is big enough so that they cannot be considered one place semantically.
- **Static:** The moving object may move. However, the movement is confined in a small geographical region. The geographical location is within one semantic place.
- **Inactive:** The moving object's orientation change will be small in this state.

Correspondingly, a location sensing machine for a moving object has four power states:

- **Active:** The sensing machine turns on one or more location sensors to sample locations (in particular a "second location sensing module" is turned on according to one embodiment).
- **Standby:** The sensing machine turns off location sensors (second location sensing module(s)) and turns on a movement detection sensor (first location sensing module) periodically. The second location sensing module is "switched on" and ready to start location sensing when the first location sensing module (movement detector) detects the moving object has left a geographical location.
- **Sleep:** The sensing machine turns off location sensors (first and second location sensing modules) and stops detecting location changes. Only a low power activity detection sensor (orientation sensor) is periodically wakened up to detection phone's orientation change.
- **Deep sleep:** Same as sleep state. However, the activity detection frequency is even lower.

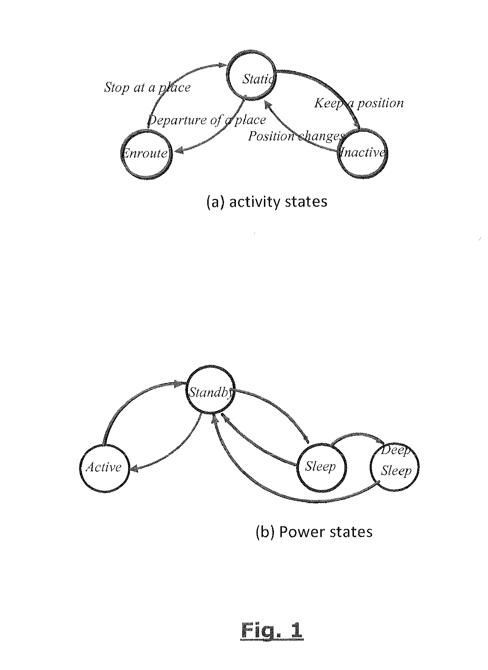

Figure 1 schematically illustrates the activity states and the corresponding power states. One power state corresponds to one activity states. Active corresponds to the state Enroute. Standby corresponds to the state Static. Sleep or Deep sleep corresponds to the state Inactive. When a moving object's activity state changes, the power management state according to one embodiment is adjusted too. According to one embodiment a *movement detector* (a second location sensing module) and an *activity detector* (a first location sensing module) are used to detect the transitions of activity states as illustrated in Fig. 1.

While in the following description the on the activity detector (the orientation sensing module) and the sleep policy will be explained, first of all there will be briefly introduce the movement detector (i.e. the "first location sensing module") first. The movement detector according to one embodiment compares the environmental footprints to verify if the object is staying in a location. The movement detector moves the activity state from Static to Enroute, if it detects a significant change of the environmental footprint in current time $t_i$ from the previous ones $t_{i-1}$. If it detects no change, or if the change lies below a certain threshold, then the object's activity state transits to static. For implementing a movement detector which detects environmental footprints there can be used detectors for detecting locations, noise level, features like WIFI hotspots and signal strength, GSM cell IDs, etc.

The activity detector is used to detect activity or inactiveness of the moving object in a similar way. The detection of the orientation of the phone is used to implement an activity detector in one embodiment. As the personal belonging of the owner, a phone's change of orientation is a good indicator of the owner's activity level. Meanwhile, orientation is not stateless and the detecting interval can be arbitrary long after the change has happened. The orientation sensing module can sleep for any period, then wakeup and still be able to detect the change. This characteristic provides a great potential for power savings in the present approach.

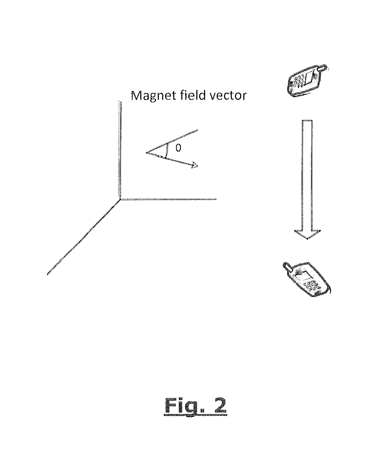

The activity detector is implemented by using a magnetometer. Let $(x_t, y_t, z_t)$ be the magnetic field vector read from magnetometer at time t. The smart phone releases all resources and sleep for $\Delta t$ time. Let $(x_{t+\Delta t}, y_{t+\Delta t}, z_{t+\Delta t})$ be the magnetic field vector at time $t + \Delta t$. As illustrated in Fig. 2 then the angle of two vectors is

$$\alpha = arccos\left(\frac{x_t x_{t+\Delta t} + y_t y_{t+\Delta t} + z_t z_{t+\Delta t}}{\sqrt{x_t^2 + y_t^2 + z_t^2}\sqrt{x_{t+\Delta t}^2 + y_{t+\Delta t}^2 + z_{t+\Delta t}^2}}\right)$$

The activity detector is used to switch the power state between Sleep (or Deep Sleep) and Standby by switching on a first location sensor (movement detector). If the angle of the magnetic field vectors is greater than a threshold, the power state of the phone is adjusted to Standby. If the angle is smaller than the threshold, that means the user is still inactive, the power state is moved to Sleep, i.e. a first location sensor (movement detector) is switched off. It should be noted that the magnetometer sampling frequencies in Standby state and Sleep state according to one embodiment are different.

When the phone is inactive, all the sensors (first and second location sensors) and the CPU will be turned off and the phone sleeps. Still, the activity detector needs to be wakened up periodically to check the phone's position change. One may try to find the best single detecting frequency for the sleep mode first. However, it could be observed that the probability of phone owner becoming active is not uniformly distributed on different times. Namely, one can see in some periods, e.g., during the late night from 1am to 5am, it is very unlikely that a user is active and moving. On the other hand, if it is lunch time, one can expect the user will be moving more often.

Therefore, according to one embodiment there is provided an extra power saving state: deep sleep, where the phone's wakeup frequency is set even lower than in the sleep mode to almost minimum.

According to one embodiment, in the sleep state (or also in the deep sleep state), the activity detection frequency is dynamically decided by the frequency of waking up around the time. This will now be briefly described as follows.

According to one embodiment the frequency with which the orientation sensing module senses the orientation of the mobile device is changed depending on the time in accordance with the behaviour pattern of the user of said mobile device such that at a time where the behaviour pattern corresponds to a lower activity the sampling frequency is lower and at a time where the behaviour pattern corresponds to a higher activity the sampling frequency is higher.

According to one embodiment such a change of the frequency may be implemented as described in the following.

Given a history of wakeup event history of a phone as sequence of timestamps $(w_1, w_2, ..., w_n)$. The algorithm first maps the wakeup events into the quarter time slots of 24 hours per day, (1:00 - 1:15), (1:15 - 1:30).... The result data structure is called *wakeup frequency table,* denoted as $(t, n)$. Where t is a time period, n is the number of wakeup times in this time period in the history. Given a wakeup frequency table, and the total number of wake up times W as the power budget, the adaptation of the wakeup frequency according to the measured user behaviour can be implemented as follows.

1. First, compute the total number N of wakeup events in the wakeup frequency table.
2. For a time slot $t_i$, compute the weight of wakeup as $n_i/N$, as probability distribution in slot $t_i$.
3. Determine the wakeup frequency $f_i$ in a time slot $t_i$ based on the thus determined probability: $f_i = Wn_i/N$
4. If the frequency in a time slot is zero, then the phone will enter deep sleep mode. In this case the (predetermined) minimum wakeup frequency $f_m$ will be used in this time slot $t_i$.
5. If the frequency $f_i$ is bigger than 0, then the wakeup frequency in this time slot is $f_i + f_m$.

It will be readily apparent to the skilled person that the methods, the elements, modules, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor.

**Claims**

1. An apparatus for energy efficient location sensing of a mobile device, said apparatus comprising:

   An orientation sensing module for sensing the orientation of said mobile device;
   one or more location sensing modules for sensing the location of said mobile device,
   a control module for controlling said orientation sensing module such that it repeatedly senses the orientation of said mobile device, wherein said control module controls said one or more location sensing modules such that at least one of said one or more location sensing modules is switched on if said sensed orientation indicates an orientation change of said mobile device.

2. The apparatus of claim 1, wherein
   if based on the location sensed by said one or more location sensing modules or said orientation sensed by said orientation sensing module it is determined that said mobile device does not move, said control module switches off at least one of said one or more location sensing modules.

3. The apparatus of claim 1, or 2, wherein
   an orientation change is detected based on the angle difference of two magnetic field vector measurements.

4. The apparatus of one of the preceding claims, wherein
   the frequency with which said orientation sensing module senses the orientation of said mobile device is changed depending on the time in accordance with the behaviour pattern of the user of said mobile device such that at a time where the behaviour pattern corresponds to a lower activity the sampling frequency is lower and at a time where the behaviour pattern corresponds to a higher activity the sampling frequency is higher.

5. The apparatus of claim 4, wherein
said behaviour pattern is measured for user of said mobile device by recording over time the frequency with which a sensed orientation is indicative of a change from an inactive state to an active state.

6. The apparatus of one of the preceding claims, wherein
said apparatus comprises a first location sensing module having a lower energy consumption and a second location sensing module having a higher energy consumption, and wherein if said orientation sensing module indicates an orientation change said first location sensing module is switched on, and wherein
if said first location sensing module indicates that said mobile device leaves a certain location or area, said second location sensing module is switched on.

7. The apparatus of claim 6, wherein
said first location sensing module has a lower energy consumption than said second location sensing module, and/or wherein
said first location sensing module has a lower accuracy than said second location sensing module.

8. A method for energy efficient location sensing of a mobile device, said method comprising:

repeatedly sensing the orientation of said mobile device by orientation sensing module,
if said sensed orientation indicates an orientation change of said mobile device, switching on one or more location sensing modules.

9. The method of claim 8, wherein
if based on the location sensed by said one or more location sensing modules or said orientation sensed by said orientation sensing module it is determined that said mobile device does not move, switching off at least one of said one or more location sensing modules.

10. The method of claim 8 or 9, wherein
the frequency with which said orientation sensing module senses the orientation of said mobile device is changed depending on the time in accordance with the behaviour pattern of the user of said mobile device such that at a time where the behaviour pattern corresponds to a lower activity the sampling frequency is lower and at a time where the behaviour pattern corresponds to a higher activity the sampling frequency is higher.

11. The method of claim 10, wherein
said behaviour pattern is measured for user of said mobile device by recording overtime the frequency with which a sensed orientation is indicative of a change from an inactive state to an active state.

12. The method of one of claims 8 to 11, wherein
said mobile device comprises a first location sensing module having a lower energy consumption and a second location sensing module having a higher energy consumption, and wherein if said orientation sensing module indicates an orientation change said first location sensing module is switched on, and wherein
if said first location sensing module indicates that said mobile device leaves a certain location or area, said second location sensing module is switched on.

13. The method of one of claims 8 to 12, wherein
said first location sensing module has a lower energy consumption than said second location sensing module, and/or wherein
said first location sensing module has a lower accuracy than said second location sensing module.

14. A computer program which when being executed on a computer enables said computer to carry our a method according to one of claims 8 to 13.

(a) activity states

(b) Power states

Fig. 1

Magnet field vector

0

**Fig. 2**

Europäisches
Patentamt

European
Patent Office

Office européen
des brevets

# EUROPEAN SEARCH REPORT

Application Number

EP 12 17 9920

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/300875 A1 (KIM KYU-HAN [US] ET AL) 8 December 2011 (2011-12-08) * abstract * * paragraphs [0004], [0075] - [0077], [0094] - [0095], [0125] - [0127] * ----- | 1-14 | INV. H04W4/02 |
| X | US 2010/231383 A1 (LEVINE URI [IL] ET AL) 16 September 2010 (2010-09-16) * abstract * * paragraphs [0004] - [0007] * ----- | 1-14 | |

TECHNICAL FIELDS
SEARCHED      (IPC)

H04W

The present search report has been drawn up for all claims

| Place of search | Date of completion of the search | Examiner |
|---|---|---|
| Munich | 17 January 2013 | Hilbig, Sophie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 12 17 9920

17-01-2013

| Patent document cited in search report | Publication date | Patent family member(s) | Publication date |
|---|---|---|---|
| US 2011300875 A1 | 08-12-2011 | NONE | |
| US 2010231383 A1 | 16-09-2010 | US 2010231383 A1<br>WO 2010106450 A1 | 16-09-2010<br>23-09-2010 |

EPO FORM P0459